(19) Europäisches Patentamt
European Patent Office
Office européen des brevets

(11) **EP 4 564 779 A1**

(12) **EUROPEAN PATENT APPLICATION**
published in accordance with Art. 153(4) EPC

(43) Date of publication:
04.06.2025 Bulletin 2025/23

(21) Application number: 23844840.1

(22) Date of filing: 10.03.2023

(51) International Patent Classification (IPC):
*H04L 47/72* (2022.01)

(52) Cooperative Patent Classification (CPC):
H04L 47/72; H04L 47/80; H04L 47/83

(86) International application number:
PCT/CN2023/080822

(87) International publication number:
WO 2024/021622 (01.02.2024 Gazette 2024/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.07.2022 CN 202210899147

(71) Applicant: ZTE Corporation
Shenzhen, Guangdong 518057 (CN)

(72) Inventor: PENG, Shaofu
Shenzhen, Guangdong 518057 (CN)

(74) Representative: Carangelo, Pierluigi et al
Jacobacci & Partners S.p.A.
Via Tomacelli 146
00186 Roma (IT)

(54) **LATENCY RESOURCE ALLOCATION METHOD, ELECTRONIC DEVICE, AND STORAGE MEDIUM**

(57) Embodiments of the present disclosure provide a method for allocating delay resources, an electronic device and a storage medium. The method comprises: pre-defining a plurality of delay classes for each link, wherein each delay class corresponds to one transmission delay; determining a total bit quantity according to a preset time interval and a link bandwidth; and determining a bits quota for each delay class according to a preset transmission delay interval between adjacent delay classes and the link bandwidth, wherein a sum of bits quotas for all the delay classes is equal to the total bit quantity.

Pre-define a plurality of delay classes for each link, wherein each delay class corresponds to one transmission delay — S110

Determine a total bit quantity according to a preset time interval and a link bandwidth — S120

Determine a bits quota for each delay class according to a preset transmission delay interval between adjacent delay classes and the link bandwidth, wherein a sum of bits quotas for all the delay classes is equal to the total bit quantity — S130

Fig. 2

EP 4 564 779 A1

## Description

### Cross-Reference to Related Disclosure

The present disclosure is proposed on the basis of Chinese Patent Application No. 202210899147.3 and filed on 28 July 2022, and claims the priority of this Chinese Patent Application, which is incorporated herein by reference in its entirety.

### Technical Field

The present disclosure relates to communication technology, and in particular, to a method for allocating a delay resource, an electronic device, and a computer-readable storage medium.

### Background

An architecture of a deterministic network defines Quality of Service, QoS, goals of deterministic forwarding: minimum and maximum delays from a source node to a destination node, bounded delay jitter, allowed packet loss rate, and upper bound of out-of-order packet delivery. In order to achieve predictable end-to-end transmission delay, a resource reservation means may be adopted. For example, a certain proportion of physical link bandwidth is reserved for a delay-sensitive deterministic service flow. However, the bandwidth reserved for each deterministic service flow is a statistical value, and the upper bound of delay per hop of the deterministic service flow cannot be strictly ensured. For example, a network intermediate node receives a plurality of deterministic service flows with the same priority at the same time, and bandwidth resources are reserved for all these deterministic service flows, then deterministic service flows under favorable conditions can be transmitted immediately, and deterministic service flows under the worst conditions need to wait for complete transmission of the other deterministic service flows. Hence, bandwidth management models currently applied in a network do not solve the problem of service delay requirement.

### Summary

Embodiments of the present disclosure provide a method for allocating delay resources, an electronic device, and a computer-readable storage medium, which can flexibly reserve link delay resources for deterministic services with different delay requirements in a network, thereby optimizing delay resource allocation, and providing a basis for planning and deployment of deterministic service flows.

According to a first aspect, embodiments of the present disclosure provide a method for allocating delay resources, the method includes: a plurality of delay classes are pre-defined for each link, wherein each delay class corresponds to one transmission delay, which refers to an upper bound of delay for which a packet needs to wait in line when the packet is to be transmitted to the link; a total bit quantity is determined according to a preset time interval and a link bandwidth; and a bits quota for each delay class is determined according to a preset transmission delay interval between adjacent delay classes and the link bandwidth, wherein a sum of bits quotas for all the delay classes is equal to the total bit quantity.

According to a second aspect, embodiments of the present disclosure provide a method for allocating delay resources, the method includes: a delay resource advertisement message is received, wherein the delay resource advertisement message carries resource attributes of at least one delay class of a link, the resource attributes include a transmission delay and a bits quota which correspond to the delay class, and the bits quota is determined according to a preset transmission delay interval between adjacent delay classes and a link bandwidth.

According to a third aspect, embodiments of the present disclosure provide an electronic device, including: a processor and a memory; the memory stores program instructions, which when executed by the processor, cause the processor to execute the method according to the first aspect or the second aspect as described above.

According to a fourth aspect, embodiments of the present disclosure provide a computer-readable storage medium, the computer-readable storage medium storing program instructions, which when executed by a computer, implement the method according to the first aspect or the second aspect as described above.

According to a fifth aspect, embodiments of the present disclosure provide a computer program product, the computer program product storing program instructions, which when running on a computer, cause the computer to execute the method according to the first aspect or the second aspect as described above.

According to the embodiments of the present disclosure, considering that deterministic services in a network have different delay requirements, a plurality of delay classes are pre-defined for each link, wherein each delay class corresponds to one transmission delay; then a total bit quantity allocatable to the link is determined according to a preset time interval and a link bandwidth; and then a bits quota for each delay class is determined according to a preset transmission delay interval between adjacent delay classes, wherein a sum of bits quotas for all the delay classes is equal to the total bit quantity. According to the solutions of the embodiments of the present disclosure, the proportion of bits quota corresponding to each delay class is determined according to the delay class and a preset transmission delay interval between adjacent delay classes, so as to ensure that the bits quota of each delay class can satisfy a delay requirement of a corresponding service, thereby improving the flexibility of delay resource allocation, and providing a basis for planning and deployment of deterministic service flows.

## Brief Description of the Drawings

Fig. 1 is a schematic diagram of a network scenario to which embodiments of the present disclosure are applicable;
Fig. 2 is a schematic flowchart of a method for allocating delay resources provided according to embodiments of the present disclosure;
Fig. 3 is a schematic diagram of link delay resources described according to embodiments of the present disclosure;
Fig. 4 is a schematic diagram of link delay resources in a specific example in some embodiments of the present disclosure;
Fig. 5 is a schematic diagram of link delay resources in a specific example in some embodiments of the present disclosure;
Fig. 6 is a schematic flowchart of reserving a bit quantity provided according to embodiments of the present disclosure;
Fig. 7 is a schematic diagram of another network scenario to which embodiments of the present disclosure are applicable;
Fig. 8 is another schematic flowchart of reserving a bit quantity provided according to embodiments of the present disclosure;
Fig. 9 is a schematic diagram of an encapsulation format of Transmission Delay Resource Sub-TLV provided according to embodiments of the present disclosure;
Fig. 10 is a schematic flowchart of determining a forwarding path of a service flow provided according to embodiments of the present disclosure;
Fig. 11 is a schematic flowchart of service flow transmission provided according to embodiments of the present disclosure;
Fig. 12 is another schematic flowchart of service flow transmission provided according to embodiments of the present disclosure;
Fig. 13 is a schematic flowchart of another method for allocating delay resources provided according to embodiments of the present disclosure;
Fig. 14 is a schematic diagram of a scenario where service flows with different delay classes arrive at a network node asynchronously described according to embodiments of the present disclosure; and
Fig. 15 is a schematic structural diagram of an electronic device provided according to embodiments of the present disclosure.

## Detailed Description of the Embodiments

In order to make objects, technical solutions and advantages of some embodiments of the present disclosure clearly understood, hereinafter, some embodiments of the present disclosure will be further described in detail in conjunction with the accompanying drawings and embodiments. It should be understood that the specific embodiments described herein are only used to explain some embodiments of the present disclosure, and are not intended to limit some embodiments of the present disclosure.

It should be understood that, in the illustration of the embodiments of the present disclosure, if "first" and "second", etc. are used, they are only used for the purpose of distinguishing technical features, and cannot be understood as indicating or implying relative importance or implicitly indicating the number of indicated technical features, or implicitly indicating the precedence relationship of the indicated technical features. "At least one" refers to one or more, and "a plurality of" refers to two or more. "And/or" describes an association relationship between associated objects, indicating that three relationships may exist, for example, "A and/or B" may indicate the following cases: A exists individually, both A and B exist, and B exists individually; wherein A, B may be singular or plural. The character "/" generally indicates an "or" relationship of associated objects before and after the character. "At least one of" and similar expressions thereof refer to any group of these items, including any group of singular or plural items. For example, at least one of a, b, and c can represent: a, b, c, a and b, a and c, b and c, or, a and b and c, wherein a, b, c may be singular or plural.

In addition, technical features involved in embodiments of the present disclosure described below may be combined with each other as long as the technical features do not conflict with each other.

An architecture of a deterministic network defines Quality of Service, QoS, goals of deterministic forwarding: minimum and maximum delays from a source node to a destination node, bounded delay jitter, allowed packet loss rate, and upper bound of out-of-order packet delivery. In order to achieve predictable end-to-end transmission delay, a resource reservation means may be adopted. For example, a certain proportion of physical link bandwidth is reserved for a delay-sensitive deterministic service flow.

In a draft named draft-peng-detnet-deadline-based-forwarding-01, a deadline-based service packet scheduling scheme is discussed; and the basic idea thereof is to specify, for a service packet, to use a single deadline to control service packet scheduling of all nodes along a path, and the single deadline is an offset time, and represents an allowed planned residence time of the service packet inside the node. In addition, the service packet may further carry an accumulated planned residence time, an accumulated actual residence time, and an accumulated residence time offset. According to the information, the allowed residence time of the service packet in the node is adjusted dynamically, so as to obtain a low end-to-end delay jitter. A service packet selects, according to its allowed residence time, to enter a deadline queue with a corresponding remaining time (or called a countdown). In this document, it is assumed that the deadline queue can use all bandwidth of a link to satisfy a delay requirement of a deterministic service flow, but it is not clearly stated that for one service flow, the delay requirement thereof can be satisfied by allocating how much bandwidth.

Some other documents, such as Cyclic Queuing and Forwarding, CQF, Credit-based Shaper, CBS, and Asynchronous Traffic Shaping, ATS, schemes proposed by a Time Sensitive Networking, TSN) Working Group of the Institute of Electrical and Electronic Engineers, IEEE, also analyze delay indexes for a specific shaping and queue mechanism. Both the CBS and the ATS perform rate-limiting shaping on a message according to reserved bandwidth of a service, while the CQF uses time slice round-robin and assumes that the service traffic can use full bandwidth of a link. These documents also do not clearly state a relationship between bandwidth and delay.

At present, in a packet multiplexing-based IP network, the bandwidth reserved for each service flow is a statistical value, and the upper bound of delay per hop of the service flow cannot be strictly ensured. For example, a network intermediate node receives multiple pieces of traffic with the same priority at the same time, and bandwidth resources are reserved for all these traffic, then traffic under favorable conditions can be transmitted immediately, and traffic under the worst conditions need to wait for complete transmission of the other traffic. Hence, bandwidth management models currently applied in a network do not solve the problem of service delay requirement.

In view of this, embodiments of the present disclosure provide a method for allocating delay resources, an electronic device, and a computer-readable storage medium, which can flexibly reserve link delay resources for deterministic services with different delay requirements in a network, thereby optimizing delay resource allocation, and providing a basis for planning and deployment of deterministic service flows.

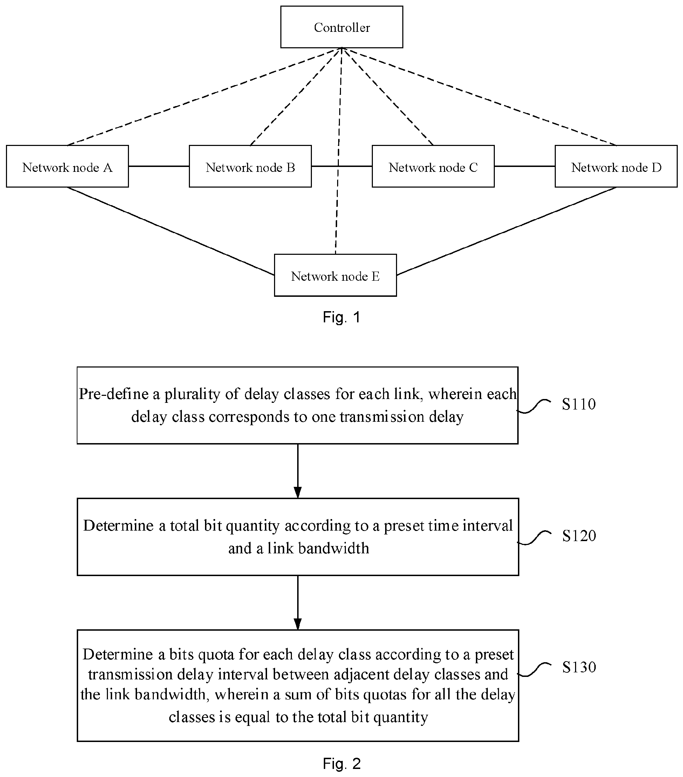

As shown in Fig. 1, this figure is a schematic diagram of a network scenario to which embodiments of the present disclosure are applicable. In the network scenario shown in Fig. 1, a controller and a plurality of network nodes (network node A, network node B, network node C, network node D, and network node E) are included, and all network nodes are in communication connection with the controller, respectively.

Each of the network nodes involved in the embodiments of the present disclosure is a forwarding device for executing a routing and forwarding function, and may be a device such as a router, a switch, and a forwarder, etc.; wherein the router, the switch, and the forwarder may be physical devices, and may also be virtual devices implemented on the basis of a virtualization technology (for example, a virtual server, a virtual router, a virtual switch, and a virtual forwarder).

It should be noted that, in the embodiments of the present disclosure, each network node includes at least one link. When a service flow in a network arrives at the network node, the service flow enters the network node from an ingress of the link, and is forwarded out of the network node from an egress of the link after queue scheduling.

The controller involved in the embodiments of the present disclosure can control and manage the plurality of network nodes, and generate a forwarding policy of each network node according to a topology of the plurality of network nodes in the network, wherein the forwarding policy is used for guiding the network node to forward a message including a destination address corresponding to the forwarding policy. The controller may be, but not limited to, a software-defined networking, SDN) controller, etc.

As shown in Fig. 2, this figure is a schematic flowchart of a method for allocating delay resources provided according to embodiments of the present disclosure. The method includes but is not limited to the following steps:

At S110, a plurality of delay classes are pre-defined for each link, wherein each delay class corresponds to one transmission delay;
At S120, a total bit quantity is determined according to a preset time interval and a link bandwidth; and
At S130, a bits quota for each delay class is determined according to a preset transmission delay interval between adjacent delay classes and the link bandwidth, wherein a sum of bits quotas for all the delay classes is equal to the total bit quantity.

The delay resources for a link described in the embodiments of the present disclosure can be represented as resources composed of multiple delay classes within a time interval (denoted as I) of a specific length, wherein each delay class has a corresponding transmission delay and bits quota. For a service flow having a specific requirement on the upper bound of delay per hop, according to a traffic specification of the service, a bit number corresponding to the traffic specification of the service is applied for in a bits quota of a corresponding delay class of each hop of link through which the traffic flows. For one link, a sum of bits quotas for all delay classes within the time interval (I) is the total bits quantity that can be transmitted by the link within the time interval (I), and is equal to total bandwidth (C) of the link multiplied by the time interval (I).

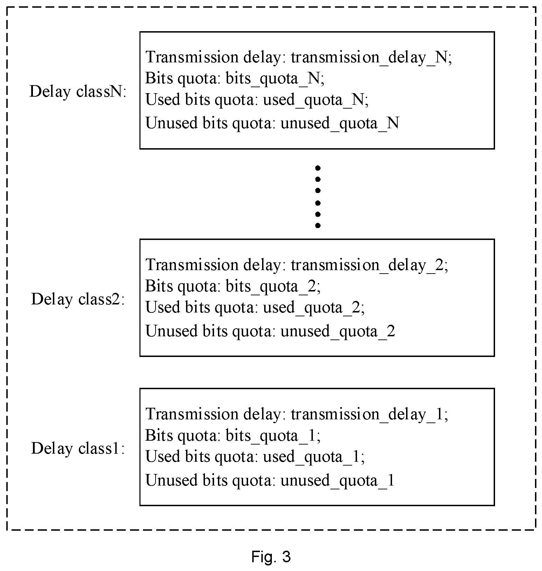

As shown in Fig. 3, this figure is a schematic diagram of link delay resources described according to embodiments of the present disclosure. In the embodiments of the present disclosure, delay resources of one link are divided into delay resources of N delay classes, and resource information included in each delay class mainly includes:

(1) A transmission delay corresponding to the delay class.

It can be understood that, each delay class has a corresponding transmission delay, and the transmission delay corresponding to each delay class is different. A transmission delay corresponding to a certain delay class represents: a duration required when a sum of bits quotas of the delay class and all delay classes at lower levels of the delay class is transmitted to the link. It should be noted that the transmission delay mentioned here refers to a delay during which a bit string is transmitted to the link in a network node, and does not include a propagation delay related to a link length.

In the embodiments of the present disclosure, a delay class 1 has the minimum transmission delay (i.e. transmission_delay_1), and a delay class N has the maximum transmission delay (i.e. transmission_delay_N).

(2) A bits quota corresponding to the delay class. The bits quota includes an occupied used bits quota (Used Quota) that has been applied for and an unoccupied unused bits quota (Unused Quota).

According to the described definitions, it can be determined:

$$transmission\_delay\_1 = bits\_quota\_1 / C$$

$$transmission\_delay\_2 = (bits\_quota\_1 + bits\_quota\_2) / C$$

$$transmission\_delay\_3 = (bits\_quota\_1 + bits\_quota\_2 + bits\_quota\_3) / C$$

...

$$transmission\_delay\_N = (bits\_quota\_1 + bits\_quota\_2 + ... + bits\_quota\_N) / C$$

It is to be noted that the value of transmission_delay_N is equal to the time interval (I).

It can be determined from the formulas provided above:

$$bits\_quota\_n=(transmission\_delay\_n - transmission\_delay\_n-1)*C, n=2, ..., N.$$

Hence, a bits quota corresponding to each delay class can be determined according to a transmission delay interval between adjacent delay classes and a link bandwidth. A specific process may include: first a total bandwidth (C) of a link is multiplied by a preset time interval (I) to obtain a total bit quantity corresponding to the link; a bits quota of the delay class 1 is equal to a product of a transmission delay of the delay class 1 and the total bandwidth (C) of the link; and then, the bits quotas of the delay class 2 to the delay class N are determined in sequence on the basis of a transmission delay interval between adjacent delay classes and the link bandwidth, for example, the bits quota of the delay class 2 is equal to a product of the total bandwidth (C) of the link and a difference between the transmission delay of the delay class 2 and the transmission delay of the delay class 1, and so on.

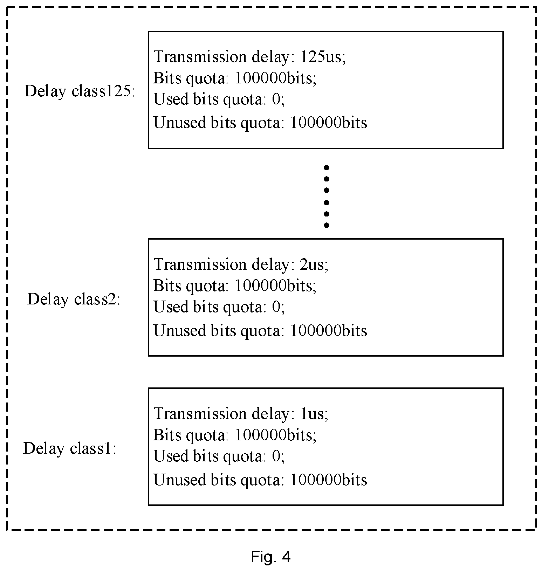

As shown in Fig. 4, this figure is a schematic diagram of link delay resources in a specific example in some embodiments of the present disclosure. In the example of Fig. 4, the time interval (I) is set as 125 us, the link bandwidth is 100 Gbps, 125 delay classes are obtained by division, and the transmission delay interval between adjacent delay classes is 1 us. On the basis of the information above, first according to the time interval and the link bandwidth, the total bit quantity of the link can be calculated as $125*10^5$ bits; Then, according to the transmission delay interval between adjacent delay classes, the link bandwidth, and the total bit quantity, it may be determined that the bits quota corresponding to each delay class is $10^5$ bits.

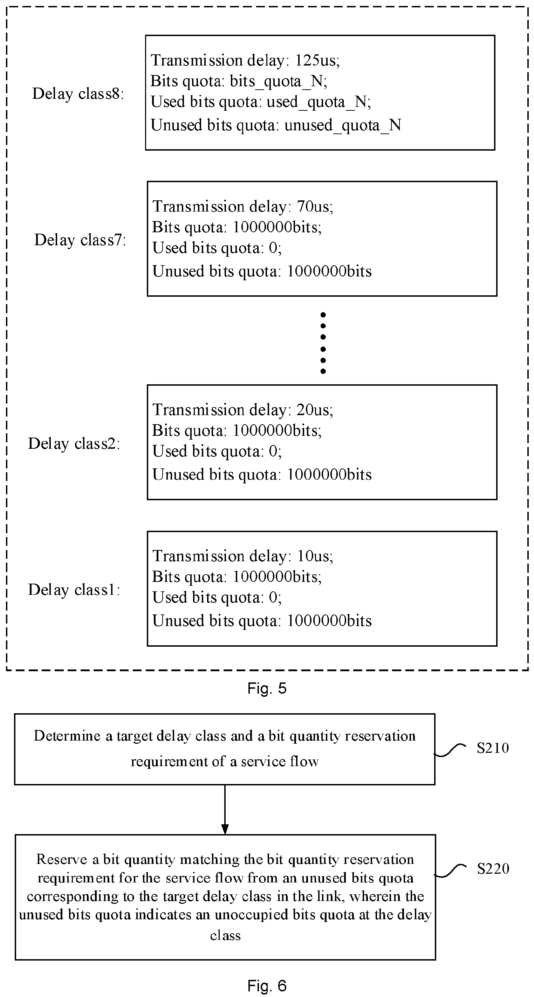

As shown in Fig. 5, this figure is a schematic diagram of link delay resources in a specific example in some embodiments of the present disclosure. In the example of Fig. 5, the time interval (I) is set as 125 us, the link bandwidth is 100 Gbps, and eight delay classes are obtained by division, and the transmission delays corresponding to delay classes 1-8 are 10 us, 20 us, 30 us, 40 us, 50 us, 60 us, 70 us and 125 us respectively. On the basis of the information above, first according to the time interval and the link bandwidth, the total bit quantity of the link can be calculated as $125*10^5$ bits; then, according to the transmission delay interval between adjacent delay classes, the link bandwidth, and the total bit quantity, it may be determined that the bits quota corresponding to delay class 8 is $5.5*10^6$ bits, and the bits quotas corresponding to delay classes 1-7 are all $10^6$ bits. During specific applications, the bits quota of the delay class 8 can be used for a bandwidth application of a traditional non-deterministic service flow, and the applicable total bandwidth provided thereby accounts for 11/25 of the total bandwidth of a link; whereas the bits quotas of the delay classes 1-7 may be used for bit quantity application of a deterministic service flow.

According to the embodiments of the present disclosure, considering that deterministic services in a network have different delay requirements, bandwidth resources of each link are divided into a plurality of delay classes, wherein each delay class corresponds to one transmission delay; the proportion of bits quota corresponding to each delay class is determined according to the delay class and a preset transmission delay interval between adjacent delay classes, so as to ensure that the bits quota of each delay class can satisfy a delay requirement of a corresponding service, thereby improving the flexibility of delay resource allocation, and providing a basis for planning and deployment of deterministic service flows.

It should be understood that the embodiments of the present disclosure can further include the following steps S210-S220 as shown in Fig. 6:

At S210, a target delay class and a bit quantity reservation requirement of a service flow are determined; and
At S220, a bit quantity matching the bit quantity reservation requirement is reserved for the service flow from an unused bits quota corresponding to the target delay class in the link, wherein the unused bits quota indicates an unoccupied bits quota at the delay class.

During specific applications, a network node may receive a resource reservation request for a service flow, determine a target delay class and a bit quantity reservation requirement of the service flow in response to the resource reservation request of the service flow, and then extract a bit quantity to be reserved for the service flow from an unused bits quota corresponding to the target delay class in the link, wherein the reserved bit quantity matches the bit quantity reservation requirement of the service flow.

Exemplarily, a process of determining the delay class of the service flow includes: a target delay class of the service flow is determined from the plurality of predefined delay classes according to a transmission delay requirement of the service flow.

Specifically, the transmission delay requirement of the service flow may be carried in a resource reservation request message of the service flow, and the transmission delay requirement may specifically include a planned residence time indicating that the service flow is allowed to reside in a network node; and the network node may determine, according to the planned residence time of the service flow and transmission delays corresponding to the predefined delay classes, a target delay class matching the service flow. For example, the planned residence time that the service flow is allowed to reside in the network node and which is carried in the resource reservation request message of the service flow is 2 us, and on the basis of the example in Fig. 4, a delay class having a transmission delay of 2 us (i.e. delay class 2) is determined as the target delay class of the service flow.

Exemplarily, a process of determining the bit quantity reservation requirement of the service flow includes: a traffic specification of the service flow is acquired; and according to the traffic specification, a bit quantity reservation requirement of the service flow or a virtual network is determined from an unused bits quota of the link at the target delay class.

The traffic specification indicates a bit quantity upper limit value generated by the service flow within the time interval, and may be carried in the resource reservation request message of the service flow.

Hereinafter, illustration is made by specific examples.

It is assumed that a traffic specification of a service flow flow-1 is that a burst bit quantity B1=50000 bits is generated within a preset time interval of 125 us, and a delay requirement is 1 us;
it is assumed that a traffic specification of a service flow-2 is that a burst bit quantity B2=50000 bits is generated within a preset time interval of 125 us, and a delay requirement is 1 us;
it is assumed that a traffic specification of a service flow-3 is that a burst bit quantity B3=50000 bits is generated within a preset time interval of 125 us, and a delay requirement is 2 us; and
it is assumed that a traffic specification of a service flow-4 is that a burst bit quantity B4=50000 bits is generated within a preset time interval of 125 us, and a delay requirement is 2 us.

Assuming that paths of the four service flows above all pass through the same link, a network node will reserve a bit quantity of 50000 bits for each of the service flows flow1 and flow2 respectively in an unused bits quota of the delay class 1 (the corresponding transmission delay is 1 us) of the link, and will reserve a bit quantity of 50000 bits for each of the service flows flow3 and flow4 respectively in an unused bits quota of the delay class 2 (the corresponding transmission delay is 2 us) of the link.

It should be understood that, after the bit quantity matching the bit quantity reservation requirement is reserved for the service flow from the unused bits quota corresponding to the target delay class in the link, the method in the embodiments of the present disclosure further includes the following step: the unused bits quota and/or used bits quota corresponding to the target delay class of the link are updated according to the bit quantity reservation requirement of the service flow.

For example, after the network node reserves a bit quantity of 50000 bits for each of the service flows flow-1 and flow2 from the unused bits quota corresponding to the delay class 1 of the link, the bit quantity reserved for each of the service flows flow-1 and flow2 is subtracted from the original unused bits quota of $10^5$ bits of the delay class 1, the unused bits quota of the delay class 1 is updated to 0, and the used bits quota thereof is updated to $10^5$ bits. After the network node reserves a bit quantity of 50000 bits for each of the service flows flow-3 and flow-4 from the unused bits quota corresponding to the delay class 2 of the link, the bit quantity reserved for each of the service flows flow-3 and flow-4 is subtracted from the original unused bits quota of $10^5$ bits of the delay class 2, the unused bits quota of the delay class 1 is updated to 0, and the used bits quota thereof is updated to $10^5$ bits.

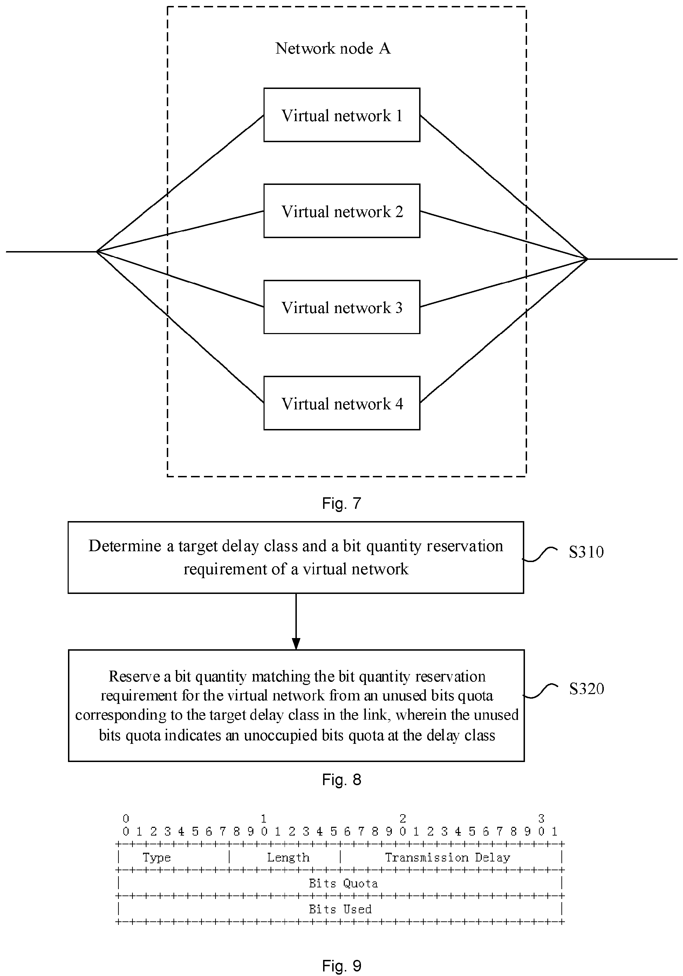

As shown in Fig. 7, this figure is a schematic diagram of another network scenario to which embodiments of the present disclosure are applicable. In the example shown in Fig. 7, physical resources (memory, bandwidth, etc.) of a network node A are abstracted by using a network virtualization technology; and a plurality of virtual networks are created on the network node A, and these virtual networks share physical network resources of one link. On the basis of the solutions of the embodiments of the present disclosure, mapping between physical network resources and virtual networks can be realized, and bandwidth resources are flexibly allocated to virtual networks with different resource requirements, such that services with different quality requirements can be satisfied by the virtual networks enjoying different resources.

The virtual networks described in the embodiments of the present disclosure include, but are not limited to: network slice, Interior Gateway Protocol, IGP, multi-topology, and an IGP flexible algorithm.

It should be understood that the embodiments of the present disclosure can further include the following steps S310-S320 as shown in Fig. 8:

At S310, a target delay class and a bit quantity reservation requirement of a virtual network are determined; and
At S320, a bit quantity matching the bit quantity reservation requirement is reserved for the virtual network from an unused bits quota corresponding to the target delay class in the link, wherein the unused bits quota indicates an unoccupied bits quota at the delay class.

During specific applications, a network node may receive a resource reservation request for a virtual network, determine a target delay class and a bit quantity reservation requirement of the virtual network in response to the resource reservation request of the virtual network, and then extract a bit quantity to be reserved for the virtual network from an unused bits quota corresponding to the target delay class in the link, wherein the reserved bit quantity matches the bit quantity reservation requirement of the virtual network.

Exemplarily, a process of determining the delay class of the virtual network includes: a target delay class of the virtual network is determined from the plurality of predefined delay classes according to a transmission delay requirement of the virtual network.

Specifically, the transmission delay requirement of the virtual network may specifically include a transmission delay upper limit of service traffic during transmission of the virtual network; and and the network node may determine, according to the transmission delay upper limit of the virtual network and transmission delays corresponding to the predefined delay classes, a target delay class matching the virtual network. For example, the transmission delay upper limit of the virtual network is 2 us, and on the basis of the example in Fig. 4, a delay class having a transmission delay of 2 us (i.e. delay class 2) is determined as the target delay class of the virtual network.

Exemplarily, a process of determining the bit quantity reservation requirement of the virtual network includes: a traffic specification of the virtual network is acquired, wherein the traffic specification indicates a bit quantity upper limit value generated by the virtual network within the time interval; and according to the traffic specification, a bit quantity reservation requirement of the virtual network is determined from an unused bits quota of the link at the target delay class.

Hereinafter, illustration is made by specific examples.

it is assumed that a traffic specification of a virtual network 1 is that a burst bit quantity B1=50000 bits is generated within a preset time interval of 125 us, and a delay requirement is 1 us;
it is assumed that a traffic specification of a virtual network 2 is that a burst bit quantity B2=50000 bits is generated within a preset time interval of 125 us, and a delay requirement is 1 us;
it is assumed that a traffic specification of a virtual network 3 is that a burst bit quantity B3=50000 bits is generated within a preset time interval of 125 us, and a delay requirement is 2 us; and
it is assumed that a traffic specification of a virtual network 4 is that a burst bit quantity B4=50000 bits is generated within a preset time interval of 125 us, and a delay requirement is 2 us.

On the basis of the information above, a network node will reserve a bit quantity of 50000 bits for each of the virtual network 1 and virtual network 2 respectively in an unused bits quota of the delay class 1 (the corresponding transmission delay is 1 us) of the link, and will reserve a bit quantity of 50000 bits for each of the virtual network 3 and virtual network 4 respectively in an unused bits quota of the delay class 2 (the corresponding transmission delay is 2 us) of the link.

It should be understood that, after the bit quantity matching the bit quantity reservation requirement is reserved for the virtual network from the unused bits quota corresponding to the target delay class in the link, the method in the embodiments of the present disclosure further includes the following step: the unused bits quota corresponding to the target delay class of the link is updated according to the bit quantity reservation requirement of the virtual network.

For example, after the network node reserves a bit quantity of 50000 bits for each of the virtual network 1 and virtual network 2 from the unused bits quota corresponding to the delay class 1 of the link, the bit quantity reserved for each of the virtual network 1 and virtual network 2 is subtracted from the original unused bits quota of $10^5$ bits of the delay class 1, the unused bits quota of the delay class 1 is updated to 0, and the used bits quota thereof is updated to $10^5$ bits. After the network node reserves a bit quantity of 50000 bits for each of the virtual network 3 and virtual network 4 from the unused bits quota corresponding to the delay class 2 of the link, the bit quantity reserved for each of the virtual network 3 and virtual network 4 is subtracted from the original unused bits quota of $10^5$ bits of the delay class 2, the unused bits quota of the delay class 1 is updated to 0, and the used bits quota thereof is updated to $10^5$ bits.

By means of the method provided in the embodiments of the present disclosure, on the basis of resource requirements of a virtual network, corresponding bandwidth resources can be allocated to the virtual network, thereby ensuring the quality of service of the virtual network.

It should be understood that the method of the embodiments of the present disclosure can further include the following step: a delay resource advertisement message is transmitted or received, wherein the delay resource advertisement message carries resource attributes of a delay class, and the resource attributes include a transmission delay, a bits quota, and a used bits quota which correspond to the delay class.

It can be understood that, a network node may transmit a delay resource advertisement message to a controller or an adjacent network node, so as to advertise link delay resources possessed by the network node itself to the controller or the adjacent network node. The delay resource advertisement message carries resource attributes of one or more delay classes, and the resource attributes specifically include a transmission delay, a bits quota, and an unused bits quota which correspond to each delay class.

Exemplarily, the delay resource advertisement message includes at least one Sub-TLV, each Sub-TLV carries resource attributes of one delay class, and the Sub-TLV includes at least one of a transmission delay field, a bits quota field, a used bits quota field and an unused bits quota field. The transmission delay field is used for carrying a transmission delay corresponding to the delay class, the bits quota field is used for carrying a bits quota corresponding to the delay class, the used bits quota field is used for carrying a used bits quota corresponding to the delay class, and the unused bits quota field is used for carrying an unused bits quota corresponding to the delay class.

Exemplarily, the Sub-TLV further includes a type field, wherein the type field carries a first value that is used to identify a resource attribute of a delay class carried by the Sub-TLV.

Exemplarily, the Sub-TLV further includes a length field, wherein the length field carries a second value for indicating the length of the Sub-TLV.

It should be understood that, the network node may transmit the delay resource advertisement message to the adjacent network node via an interior gateway protocol, IGP, and advertise the delay resource attributes of a link of the network node itself to the adjacent network node.

It should be understood that Intermediate system to intermediate system, ISIS is a hierarchical link-state routing protocol. An existing ISIS protocol suite (refer to RFC5305, RFC5311, RFC5316, RFC5120) has defined type-length-values, TLVs 22/23/141/222/223 for advertising adjacency relations, and therefore in the embodiments of the present disclosure, a Sub-type-length-value, Sub-TLV is newly added to these TLVs, is denoted as a Transmission Delay Resource Sub-TLV, and is used to carry resource attributes corresponding to a certain delay class of a link. In order to advertise delay resources corresponding to a plurality of delay classes, a plurality of Transmission Delay Resource Sub-TLVs may be added to the delay resource advertisement message.

As shown in Fig. 9, this figure is a schematic diagram of an encapsulation format of a Transmission Delay Resource Sub-TLV provided according to embodiments of the present disclosure. In the example of Fig. 9, the Transmission Delay Resource Sub-TLV includes a type field (Type), a length field (Length), a transmission delay field (Transmission Delay), a bits quota field (Bits Quota) and bits Used field, in which the Transmission Delay, the Bits Quota and the Bits Used all belong to resource attribute fields, and each field is described in sequence below:

> Type field: this field occupies 1 byte and is used for representing that the present Sub-TLV is a Transmission Delay Resource Sub-TLV via a first value.
>
> Length field: this field occupies 1 byte and is used for representing the content length of the present Sub-TLV (excluding the Type field and the Length field themselves) via a second value, so as to indicate the length of the field carrying the resource attribute.
>
> Transmission Delay field: this field occupies 2 bytes, and is used for carrying a transmission delay corresponding to a certain delay class supported by the link, and a unit thereof may be microsecond (us), and transmission delays corresponding to different delay classes must be different.
>
> Bits Quota field: this field occupies 4 bytes, and is used for carrying a bits quota corresponding to the delay class, and the unit thereof may be bit.
>
> Bits Used field: this field occupies 4 bytes, and is used for carrying a bit quantity that has been applied for occupation by a service, i.e. used bits quota, and the unit thereof is bit.

For a service flow having a specific requirement on the upper bound of delay per hop, according to a traffic specification of the service, a bit number corresponding to the traffic specification of the service is applied for in a bits quota of a corresponding delay class of each hop of link through which the traffic flows. Unused bit quantity (i.e. the unused bits quota) is obtained by subtracting the Bits Used from the Bits Quota.

It should be noted that the extension above is only an exemplary extension manner, and is not necessarily limited to such protocol extension. For example, in other extension manners, a Bits Unused field may be added to the Transmission Delay Resource Sub-TLV, or the Bits Used field may be replaced with a Bits Unused field, wherein the Bits Unused field is used to carry a bit quantity that has not been applied for occupation by a service, i.e. unused bits quota, and the unit thereof is bit. In addition, the unit thereof may also be Byte or nanosecond (ns), and in specific implementations, even designing other TLVs that can also characterize the delay resource attribute is also possible embodiments.

It should be understood that, the network node may further transmit the delay resource advertisement message to the controller by using a Border Gateway Protocol Link-state, BGP-LS, protocol. When the network node transmits the delay resource advertisement message to the controller by using the BGP-LS protocol, for an encapsulation format used by the delay resource advertisement message, reference may be made to the encapsulation format provided in the example shown in Fig. 9; and one or more Transmission Delay Resource Sub-TLVs are added to the BGP-LS protocol message to carry resource attributes of one or more delay classes.

It should be understood that the network node may receive a delay resource advertisement message transmitted by an adjacent network node via an extended interior gateway protocol, IGP, wherein the received delay resource advertisement message carries one or more Transmission Delay Resource sub-TLVs, an encapsulation format of the Transmission Delay Resource sub-TLVs may be as shown in Fig. 9, and each Transmission Delay Resource sub-TLV includes resource attributes of one delay class. The network node learns, according to the received Transmission Delay Resource sub-TLVs, delay resource attributes possessed by links of other network nodes, thereby providing a basis for formulating a forwarding path for a service flow.

It should be understood that the method provided in the embodiments of the present disclosure can further include the following step: a forwarding path of the service flow is determined according to the received delay resource advertisement message.

Exemplarily, it is assumed that the service flow flow-1 is a service flow from the network node A to the network node D, that is, the network node A is a source node, and the network node D is a destination node. The network node A may obtain, according to the received delay resource advertisement message, resource attributes of delay classes of links of other network nodes B, C, D, and E, and then determine a forwarding path of the service flow flow-1 according to information such as the resource attributes of delay classes of links of the other network nodes and path computation constraint conditions, etc.

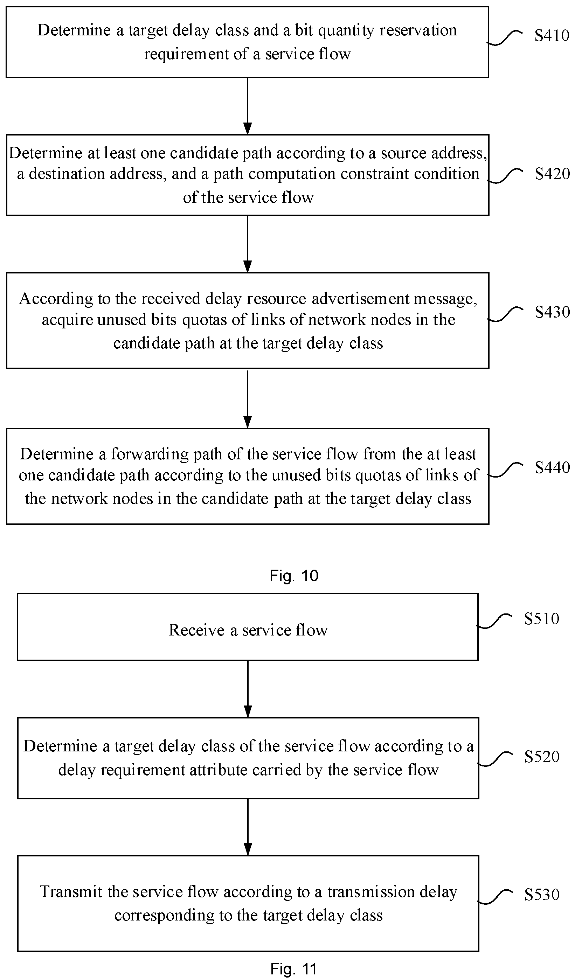

Exemplarily, the step that the forwarding path of the service flow is determined according to the received delay resource advertisement message, may specifically include the following steps as shown in Fig. 10:

At step S410, a target delay class and a bit quantity reservation requirement of a service flow are determined.

During specific implementation, a process of determining the delay class of the service flow includes: a target delay class of the service flow is determined from the plurality of predefined delay classes according to a transmission delay requirement of the service flow.

Specifically, the transmission delay requirement of the service flow may be carried in a data packet of the service flow, and the transmission delay requirement may specifically include a planned residence time indicating that the service flow is allowed to reside in a network node; and the network node may determine, according to the planned residence time of the service flow and transmission delays corresponding to the predefined delay classes, a target delay class matching the service flow. For example, the planned residence time that the service flow is allowed to reside in the network node and which is carried in the resource reservation request message of the service flow is 2 us, and on the basis of the example in Fig. 4, a delay class having a transmission delay of 2 us (i.e. delay class 2) is determined as the target delay class of the service flow.

Exemplarily, a process of determining the bit quantity reservation requirement of the service flow includes: a traffic specification of the service flow is acquired, wherein the traffic specification indicates a bit quantity upper limit value generated by the service flow within the time interval; and according to the traffic specification, a bit quantity reservation requirement of the service flow or a virtual network is determined from an unused bits quota of the link at the target delay class. The traffic specification of the service flow may also be carried in a data packet of the service flow.

For example, it is assumed that the traffic specification of the service flow flow-1 is that a burst bit quantity B1=50000 bits is generated within a preset time interval of 125 us, and a transmission delay requirement thereof is 1 us. On the basis of the example in Fig. 4, it can be determined that the target delay class corresponding to the service flow flow-1 is the delay class 1, and the corresponding bit quantity reservation requirement is 50000 bits.

At step S420, at least one candidate path is determined according to a source address, a destination address, and a path computation constraint condition of the service flow.

For example, on the basis of the example of Fig. 1, two candidate paths A-B-C-D and A-E-D may be determined according to the source address, the destination address and the path computation constraint condition of the service flow flow-1.

At step S430, according to the received delay resource advertisement message, unused bits quotas of links of the network nodes in the candidate path at the target delay class are acquired.

The network node A obtains resource attributes of the target delay class of links of other network nodes B, C, D and E according to the received delay resource advertisement message, so as to obtain bits quotas and used bits quotas of the links of other network nodes B, C, D and E at the target delay class, and calculate unused bits quotas of the links of other network nodes B, C, D and E at the target delay class.

At step S440, a forwarding path of the service flow is determined from the at least one candidate path according to the unused bits quotas of links of the network nodes in the candidate path at the target delay class.

Exemplarily, the step that the forwarding path of the service flow is determined from the at least one candidate path according to the unused bits quotas of links of the network nodes in the candidate path at the target delay class, includes: the candidate path is eliminated when the unused bits quota of a link of any one network node in the candidate path at the target delay class is less than the bit quantity reservation requirement of the service flow; and a forwarding path of the service flow is determined from candidate paths which have not been eliminated.

For example, in the existing two candidate paths A-B-C-D and A-E-D, the bit quantity reservation requirement of the service flow flow-1 is 50000 bits and the target delay class is delay class 1, but the unused bits quota of the delay class 1 of the network node E is 0, which cannot satisfy the bit quantity reservation requirement of the service flow flow-1, and therefore the candidate path A-E-D can be eliminated. For the candidate path A-B-C-D, the unused bits quotas of links of the network nodes contained in the candidate path at the delay class 1 are all greater than or equal to 50000 bits, and thus the bit quantity reservation requirement of the service flow flow-1 can be satisfied, and the path A-B-C-D can be used as a forwarding path of the service flow flow-1.

It should be understood that the method of the embodiments of the present disclosure can further include the following steps as shown in Fig. 11:

At step S510, a service flow is received;
At step S520, a target delay class of the service flow is determined according to a delay requirement attribute carried by the service flow; and
At step S530, the service flow is transmitted according to a transmission delay corresponding to the target delay class.

Exemplarily, a packet of the service flow flow-1 reaches the network node A, and a packet header of the service flow flow-1 carries a delay requirement attribute, and the delay requirement attribute is used to indicate a planned residence time that the service flow flow-1 is allowed to reside in the network node A. The network node A has previously reserved a bit quantity for the service flow flow-1, and upon receiving the packet of the service flow flow-1, the network node A determines a target delay class of the service flow flow-1 according to the delay requirement attribute carried in the service flow flow-1. Herein, it is assumed that the delay requirement attribute of the service flow flow-1 is 1 us, on the basis of the delay resources provided in the example in Fig. 4, it can be determined that the target delay class of the service flow flow-1 is a delay class 1, and the packet of the service flow flow-1 is forwarded out within 1 us according to a transmission delay corresponding to the determined target delay class.

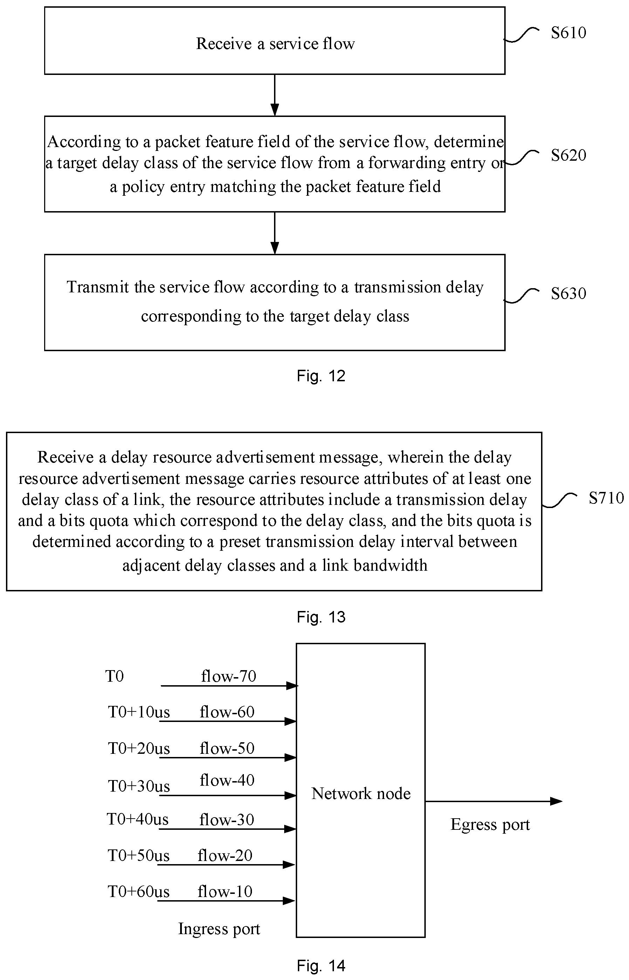

It should be understood that the method of the embodiments of the present disclosure can further include the following steps as shown in Fig. 12:

At step S610, a service flow is received;

At step S620, according to a packet feature field of the service flow, a target delay class of the service flow is determined from a forwarding entry or a policy entry matching the packet feature field; and

At step S630, the service flow is transmitted according to a transmission delay corresponding to the target delay class.

Exemplarily, a packet of the service flow flow-1 reaches the network node A, a packet header of the service flow flow-1 carries a packet feature field, and the packet feature field is used to identify the service flow flow-1, and it is assumed herein that the packet feature field of the service flow flow-1 carries a label 1101. The network node A has previously reserved a bit quantity for the service flow flow-1, and upon receiving the packet of the service flow flow-1, the network node A acquires the label 1101 of the service flow flow-1 from the packet feature field carried in the service flow flow-1, and then searches for a forwarding entry or a policy entry corresponding to the label, and acquires a transmission delay requirement or a delay class therefrom, such that a target delay class of the service flow flow-1 can be determined. Herein, it is assumed that the transmission delay requirement corresponding to the label 1101 recorded in the forwarding entry is 1 us, on the basis of the delay resources provided in the example in Fig. 4, it can be determined that the target delay class of the service flow flow-1 is a delay class 1, and the packet of the service flow flow-1 is forwarded out within 1 us according to a transmission delay corresponding to the determined target delay class.

By the method provided in the embodiments of the present disclosure, the network node reserves a corresponding bandwidth resource for a service flow according to a delay class of the service flow, thereby ensuring that the service flow is reasonably scheduled within a required transmission delay at the delay class, and providing effective guarantee for deterministic forwarding of the service flow.

As shown in Fig. 13, this figure is a schematic flowchart of another method for allocating delay resources provided according to embodiments of the present disclosure. The method may be executed by a controller, and includes, but is not limited to, the following step:

step S710, a delay resource advertisement message is received, wherein the delay resource advertisement message carries resource attributes of at least one delay class of a link, the resource attributes include a transmission delay and a bits quota which correspond to the delay class, and the bits quota is determined according to a preset transmission delay interval between adjacent delay classes and a link bandwidth.

It can be understood that the controller receives the delay resource advertisement message from a network node, and obtains a resource attribute of a delay class of a link of the network node.

Exemplarily, the resource attributes further include at least one of an unused bits quota and a used bits quota which correspond to the delay class.

The method provided in the embodiments of the present disclosure can further include the following steps:

step S720, a target delay class and a bit quantity reservation requirement of a service flow are determined; and
step S730, a forwarding path of the service flow is determined according to the unused bits quota corresponding to the target delay class and the bit quantity reservation requirement of the service flow.

It can be understood that, upon receiving a path computation request of the service flow, the controller computes a path for the service flow actively or in response to the path computation request, and determines the target delay class and the bit quantity reservation requirement of the service flow. For a specific process of determining the target delay class and the bit quantity reservation requirement of the service flow, reference can be made to the related illustration in step S410, and details will not be repeated herein.

Specifically, the step that the forwarding path of the service flow is determined according to the unused bits quota corresponding to the target delay class and the bit quantity reservation requirement of the service flow, includes: at least one candidate path is determined according to a source address, a destination address, and a path computation constraint condition of the service flow; according to the received delay resource advertisement message, unused bits quotas of links of the network nodes in the candidate path at the target delay class is acquired; and a forwarding path of the service flow is determined from the at least one candidate path according to the unused bits quotas of links of the network nodes in the candidate path at the target delay class.

It should be noted that the unused bits quota corresponding to the target delay class may be directly obtained from the unused bits quota in the resource attributes carried in the delay resource advertisement message; or may be calculated according to the bits quota and the used bits quota in the resource attributes carried in the delay resource advertisement message.

Exemplarily, the step that the forwarding path of the service flow is determined from the at least one candidate path according to the unused bits quotas of links of the network nodes in the candidate path at the target delay class, includes: the candidate path is eliminated when the unused bits quota of a link of any one network node in the candidate path at the target delay class is less than the bit quantity reservation requirement of the service flow; and a forwarding path of the service flow is determined from candidate paths which have not been eliminated.

For a specific process of determining, by the controller, the forwarding path of the service flow, reference can be made to the related illustration in step S440, and details will not be repeated herein.

Exemplarily, the delay resource advertisement message is transmitted by the network node via a Border Gateway Protocol Link-state, BGP-LS protocol; and the delay resource advertisement message includes at least one Sub-type-length-value, Sub-TLV, and the Sub-TLV includes at least one of a transmission delay field, a bits quota field, a used bits quota field and an unused bits quota field. The transmission delay field is used for carrying a transmission delay corresponding to the delay class, the bits quota field is used for carrying a bits quota corresponding to the delay class, the used bits quota field is used for carrying a used bits quota corresponding to the delay class, and the unused bits quota field is used for carrying an unused bits quota corresponding to the delay class.

Exemplarily, the delay resource advertisement message further includes a type field, wherein the type field carries a first value that is used to identify a resource attribute of a delay class carried by the Sub-TLV.

Exemplarily, the delay resource advertisement message further includes a length field, wherein the length field carries a second value for indicating the length of the Sub-TLV.

It should be noted that, for an encapsulation format used by the delay resource advertisement message herein, reference may be made to the encapsulation format provided in the example shown in Fig. 9; and one or more Transmission Delay Resource Sub-TLVs are added to the BGP-LS protocol message to carry resource attributes of one or more delay classes.

According to the embodiments of the present disclosure, a forwarding path of the service flow is calculated according to link delay resources of the network node, so as to provide guarantee for end-to-end delay determination of the service flow.

As shown in Fig. 14, this figure describes a scenario where service flows with different delay classes arrive at a network node asynchronously, and describes traffic of different delay classes arrives at a certain network node in sequence. At time T0, flow-70 arrives at the node, and a transmission delay requirement thereof is 70 us; at time T0+10us, flow-60 arrives at the node, and a transmission delay requirement thereof is 60 us; and so on, at time T0+60 us, flow-10 arrives at the node, and a transmission delay requirement thereof is 10 us. In this scenario, service flows with large delay classes arrive at the network node before service flows with small delay classes, and it is assumed that all these service flows are expected to be forwarded from the same egress port.

Hereinafter, on the basis of the delay resources shown in Fig. 5, whether each of the service flows in the scenario shown in Fig. 13 has an expected delay per hop is discussed.

An ideal situation of the scenario shown in Fig. 14 is that because these service flows arrive in sequence, in cases where there is no congestion, these service flows will be immediately forwarded. For example, although flow-70 can tolerate a delay of 70 us, if there is no congestion, it does not need to really wait for 70 us to transmit. However, if there is congestion, that is, there are buffered packets in queues corresponding to all delay classes, then packets buffered in queues with smaller delay classes are transmitted first, while packets buffered in queues with larger delay classes are transmitted later; for example, packets in the flow-70 are buffered in a queue with a delay class of 70 us, and then are transmitted only after a delay of 70 us. In fact, as long as admission control is implemented on these deterministic service flows at a network ingress node strictly according to traffic specifications thereof, flow-70 will be delayed by 70 us only once within a time interval of 125 us; otherwise, all the deterministic service flows have completely occupied the whole bandwidth of the link, that is, a fully-loaded deterministic service flow is generated circularly every 70 us, which violates the traffic specifications of the deterministic service flows. However, in the 70 us during which the flow-70 is delayed, there is actually the latest 10 us contributed by flow-10 of a previous round, which means that flow-10 of this round (i.e. received at T0+60 us) cannot occur actually; otherwise, flow-10 will occur for multiple times within a single time interval of 125 us, which violates the traffic specifications of the deterministic service flows. It should be noted that a queuing delay adjustment mechanism discussed in the document draft-peng-detnet-deadline-based-forwarding-01 makes the delay class of one packet migrated. This brings an advantage that, local microbursting in a network may result in a node receiving deterministic service flows exceeding the bandwidth capability within a single time interval of 125 us; however, these deterministic service flows necessarily include those traffic that has a large delay class but quickly reaches the present node. Such traffic will be given a greater delay class or even temporarily processed as BE (Best-effort) traffic, that is, these traffic does not affect really emergent traffic.

In addition, the document draft-peng-detnet-deadline-based-forwarding-01 or IEEE TSN CQF discusses a mechanism in which a packet actively waits for a certain time and then is transmitted, even if no congestion occurs. In this case, a packet of the flow-70 may actively wait for 70 us (counting from a receiving moment of the packet); similarly, a packet of the flow-60 may actively wait for 60 us, and so on; and a packet of the flow-10 may actively wait for 10 us. Then, at time T0+70 us, all the packets of these flows stop waiting, and then are transmitted almost at the same time. At this time, it is found that the flow-70 is transmitted first, and finally flow-10 is transmitted; and in the worst case, flow-10 may be delayed by an additional 60 us, which obviously exceeds the expected delay per hop of the flow-10. In order to solve this problem, the document draft-peng-detnet-deadline-based-forwarding-01 proposes the queuing delay adjustment mechanism, in which the flow-10 will be forwarded at a higher speed at a downstream node. However, in order to make the solutions of the present patent achieve a better effect, it is recommended that these service flows actively waiting for a certain period of time only include services with small delay classes.

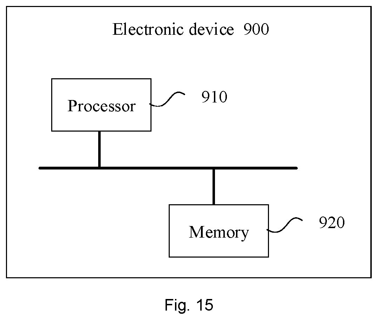

Embodiments of the present disclosure further provide an electronic device. As shown in Fig. 15, the electronic device 900 includes, but is not limited to:

a processor 910 and a memory 920;

Program instructions are stored on the memory 920, and when the program instructions are executed by the processor 910, the processor 910 is enabled to execute the method for allocating delay resources described in any of the embodiments above.

In some specific embodiments, the electronic device may be used to implement each step of the method for allocating delay resources corresponding to the network node in the method embodiments above.

In some other specific embodiments, the electronic device may be used to implement each step of the method for allocating delay resources corresponding to the controller in the method embodiments above.

It should be understood that the processor 910 and the memory 920 may be connected via a bus or in another manner.

It should be understood that the processor 910 may employ a Central Processing Unit, CPU. The processor may be another general-purpose processor, a Digital Signal Processor, DSP, an Application Specific Integrated Circuit, ASIC, a Field-Programmable Gate Array, FPGA, or other programmable logic devices, a discrete gate or transistor logic device, or a discrete hardware component, etc.. The general-purpose processor may be a microprocessor, or the processor may also be any conventional processor, etc. Alternatively, the processor 910 may employ one or more integrated circuits for executing related programs, so as to implement the technical solutions provided in the embodiments of the present disclosure.

The memory 920, as a non-transitory computer-readable storage medium, may be used to store a non-transitory software program and a non-transitory computer-executable program, such as the method for allocating delay resources executed by an electronic device side described in any embodiment of the present disclosure. The processor 910 implements the method for allocating delay resources above by running the non-transitory software program and instructions stored in the memory 920.

The memory 920 may include a program storage area and a data storage area, wherein the program storage area may store an operating system and an application program required by at least one function; and the data storage area may store data for executing the method for allocating delay resources above or a training method for a spectrum sensing model. In addition, the memory 920 may include a high-speed random access memory, and can further include a non-transitory memory, for example, at least one magnetic disk storage device, a flash memory device, or other non-transitory solid-state storage devices. In some embodiments, the memory 920 includes a memory that is remotely arranged relative to the processor 910, and these remote memories can be connected to the processor 910 via a network. Examples of the network include, but are not limited to the Internet, an intranet, a local area network, a mobile communication network and combinations thereof.

A non-transitory software program and instructions required for implementing the method for allocating delay resources above are stored in the memory 920, and when the non-transitory software program and instructions are executed by one or more processors 910, the method for allocating delay resources provided in any embodiment of the present disclosure is executed.

Embodiments of the present disclosure further provide a computer-readable storage medium; the computer-readable storage medium stores program instructions, which when executed by a computer, implement the method for receiving a reference signal described in any embodiment above, or the method for allocating delay resources described in any embodiment above.

In some specific embodiments, the computer-readable storage medium may be used to implement each step of the method for allocating delay resources corresponding to the network node in the method embodiments above.

In some other specific embodiments, the computer-readable storage medium may be used to implement each step of the method for allocating delay resources corresponding to the controller in the method embodiments above.

The computer storage medium in the embodiments of the present disclosure may be any combination of one or more computer-readable media. The computer-readable medium may be a computer-readable signal medium or a computer-readable storage medium. The computer-readable storage medium may be, for example, but not limited to, an electronic, magnetic, optical, electromagnetic, infrared, or semiconductor system, apparatus, or device, or any combination thereof. More specific examples (a non-exhaustive list) of the computer-readable storage medium include: an electrical connection having one or more conductive wires, a portable computer disk, a hard disk, a random access memory, RAM, a read-only memory, ROM, an erasable programmable read-only memory, EPROM, (or Flash memory), an optical fiber, a portable compact disc read-only memory, CD-ROM, an optical storage device, a magnetic storage device, or any suitable combination thereof. In the present document, the computer-readable storage medium may be any tangible medium that can contain or store a program, the program can be used by or used in connection with an instruction execution system, apparatus, or device.

The computer-readable signal medium may include a data signal which is included in a baseband or propagated as a part of a carrier, wherein the data signal carries computer-readable program codes. Such a propagated data signal may take a plurality of forms, including, but not limited to, electromagnetic signal, optical signal, or any suitable combination thereof. The computer-readable signal medium may also be any computer-readable medium other than a computer-readable storage medium, and the computer-readable storage medium can send, propagate or transmit a program for use by an instruction execution system, apparatus, or device or for use in combination therewith.

Program codes included in the computer-readable medium may be transmitted via any suitable medium, including but not limited to wireless, electric wire, optical cable, RF, etc., or any suitable combination thereof.

Computer program codes for carrying out operations in some embodiments of the present disclosure may be written in one or more programming languages or a combination thereof, wherein the programming languages include object-oriented programming languages such as Java, Smalltalk, C++, and also include conventional procedural programming languages, such as "C" language or similar programming languages. The program codes may be executed entirely on a user's computer, executed partially on the user's computer, executed as a stand-alone software packet, executed partially on the user's computer and executed partially on a remote computer or executed entirely on the remote computer or a server. In situations involving the remote computer, the remote computer may be connected to the user's computer via any type of network, including a local area network, LAN or a wide area network, WAN; or the remote computer may be connected to an external computer (for example, via Internet connection by using an Internet Service Provider).

Embodiments of the present disclosure provide a computer program product; the computer program product stores program instructions, which when running on a computer, cause the computer to implement the method for allocating delay resources described in any embodiment above.

In some specific embodiments, the computer program product may be used to implement each step of the method for allocating delay resources corresponding to the network node in the method embodiments above.

In some other specific embodiments, the computer program product may be used to implement each step of the method for allocating delay resources corresponding to the controller in the method embodiments above.

The content above makes specific explanation on preferred embodiments of the present disclosure, but the present disclosure is not limited to the embodiments above. A person skilled in the art could also make various equivalent modifications or replacements without departing from substantial sharing conditions of the present disclosure, and these equivalent modifications or replacements are all included in the scope defined in the present disclosure.

**Claims**

1. A method for allocating a delay resource, the method comprising:

    pre-defining a plurality of delay classes for each link, wherein each delay class corresponds to one transmission delay;
    determining a total bit quantity according to a preset time interval and a link bandwidth; and
    determining a bits quota for each delay class according to a preset transmission delay interval between adjacent delay classes and the link bandwidth, wherein a sum of bits quotas for all the delay classes is equal to the total bit quantity.

2. The method according to claim 1, further comprising:

    determining a target delay class and a bit quantity reservation requirement of a service flow or a virtual network; and
    reserving a bit quantity matching the bit quantity reservation requirement for the service flow or the virtual network from an unused bits quota corresponding to the target delay class in the link, wherein the unused bits quota indicates an unoccupied bits quota at the delay class.

3. The method according to claim 2, wherein a process of determining the delay class of the service flow or the virtual network comprises:
    determining a target delay class of the service flow or the virtual network from the plurality of predefined delay classes according to a transmission delay requirement of the service flow or the virtual network.

4. The method according to claim 2, wherein a process of determining the bit quantity reservation requirement of the service flow or the virtual network comprises:

    acquiring a traffic specification of the service flow or the virtual network, wherein the traffic specification indicates a bit quantity upper limit value generated by the service flow or the virtual network within the time interval; and determining, according to the traffic specification, a bit quantity reservation requirement of the service flow or the virtual network from an unused bits quota of the link at the target delay class.

5. The method according to claim 2, wherein after reserving the bit quantity matching the bit quantity reservation requirement for the service flow or the virtual network from the unused bits quota corresponding to the target delay class in the link, the method further comprises:
updating the unused bits quota and/or used bits quota corresponding to the target delay class of the link according to the bit quantity reservation requirement of the service flow or the virtual network.

6. The method according to claim 1, further comprising:

   receiving a service flow;
   determining a target delay class of the service flow according to delay requirement attributes carried by the service flow; and
   transmitting the service flow according to a transmission delay corresponding to the target delay class.

7. The method according to claim 1, further comprising:

   receiving a service flow;
   determining, according to a packet feature field of the service flow, a target delay class of the service flow from a forwarding entry or a policy entry matching the packet feature field; and
   transmitting the service flow according to a transmission delay corresponding to the target delay class.

8. The method according to claim 1, further comprising:
transmitting or receiving a delay resource advertisement message, wherein the delay resource advertisement message carries resource attributes of a delay class, and the resource attributes include at least one of a transmission delay, a bits quota, a used bits quota, and an unused bits quota which correspond to the delay class.

9. The method according to claim 8, wherein the delay resource advertisement message comprises at least one Sub-type-length-value, Sub-TLV, and the Sub-TLV comprises at least one of a transmission delay field, a bits quota field, a used bits quota field and an unused bits quota field.

10. The method according to claim 9, wherein the Sub-TLV further comprises a type field, wherein the type field carries a first value that is used to identify a resource attribute of a delay class carried by the Sub-TLV.

11. The method according to claim 9, wherein the Sub-TLV further comprises a length field, wherein the length field carries a second value for indicating the length of the Sub-TLV.

12. The method according to claim 8, wherein transmitting or receiving the delay resource advertisement message comprises at least one of:

   receiving the delay resource advertisement message transmitted by an adjacent network node via an extended Interior Gateway Protocol, IGP;
   or transmitting the delay resource advertisement message to an adjacent network node via an extended IGP;
   or transmitting the delay resource advertisement message to a controller via a Border Gateway Protocol Link-state, BGP-LS, protocol.

13. The method according to claim 12, further comprising:
determining a forwarding path of the service flow according to the received delay resource advertisement message.

14. The method according to claim 13, wherein determining the forwarding path of the service flow according to the received delay resource advertisement message, comprises:

   determining a target delay class and a bit quantity reservation requirement of a service flow;
   determining at least one candidate path according to a source address, a destination address, and a path computation constraint condition of the service flow;
   according to the received delay resource advertisement message, acquiring unused bits quotas of links of network nodes in the candidate path at the target delay class; and

determining a forwarding path of the service flow from the at least one candidate path according to the unused bits quotas of links of the network nodes in the candidate path at the target delay class.

15. The method according to claim 14, wherein determining the forwarding path of the service flow from the at least one candidate path according to the unused bits quotas of links of the network nodes in the candidate path at the target delay class, comprises:

eliminating the candidate path when the unused bits quota of a link of any one network node in the candidate path at the target delay class is less than the bit quantity reservation requirement of the service flow; and

determining a forwarding path of the service flow from candidate paths which have not been eliminated.

16. A method for allocating a delay resource, the method comprising:

receiving a delay resource advertisement message, wherein the delay resource advertisement message carries resource attributes of at least one delay class of a link, the resource attributes comprise a transmission delay and a bits quota which correspond to the delay class, and the bits quota is determined according to a preset transmission delay interval between adjacent delay classes and a link bandwidth.

17. The method according to claim 16, wherein the resource attributes further comprise at least one of an unused bits quota and a used bits quota which correspond to the delay class; and

the method further comprises:

determining a target delay class and a bit quantity reservation requirement of a service flow; and

determining a forwarding path of the service flow according to the unused bits quota corresponding to the target delay class and the bit quantity reservation requirement of the service flow.

18. The method according to claim 17, wherein

determining the forwarding path of the service flow according to the unused bits quota corresponding to the target delay class and the bit quantity reservation requirement of the service flow, comprises:

determining at least one candidate path according to a source address, a destination address, and a path computation constraint condition of the service flow;

acquiring, according to the received delay resource advertisement message, unused bits quotas of links of network nodes in the candidate path at the target delay class; and

determining a forwarding path of the service flow from the at least one candidate path according to the unused bits quotas of links of the network nodes in the candidate path at the target delay class.

19. The method according to claim 18, wherein determining the forwarding path of the service flow from the at least one candidate path according to the unused bits quotas of links of the network nodes in the candidate path at the target delay class, comprises:

eliminating the candidate path when the unused bits quota of a link of any one network node in the candidate path at the target delay class is less than the bit quantity reservation requirement of the service flow; and

determining a forwarding path of the service flow from candidate paths which have not been eliminated.

20. The method according to claim 17, wherein the delay resource advertisement message is transmitted by the network node via a Border Gateway Protocol Link-state, BGP-LS, protocol; and the delay resource advertisement message comprises at least one Sub-type-length-value, Sub-TLV, and the Sub-TLV comprises at least one of a transmission delay field, a bits quota field, a used bits quota field and an unused bits quota field.

21. The method according to claim 20, wherein the delay resource advertisement message further comprises a type field, wherein the type field carries a first value that is used to identify a resource attribute of a delay class carried by the Sub-TLV.

22. The method according to claim 20, wherein the delay resource advertisement message further comprises a length field, and

the length field carries a second value indicating the length of the Sub-TLV.

23. An electronic device, comprising:

a processor and a memory;
wherein the memory stores program instructions, which when executed by the processor, cause the processor to execute the method according to any one of claim 1 to claim 22.

24. A computer-readable storage medium, storing program instructions which, when executed by a computer, implement the method as claimed in any one of claim 1 to claim 22.

25. A computer program product, storing program instructions which, when executed by a computer, cause the computer to implement the method as claimed in any one of claim 1 to claim 22.

Fig. 1

Pre-define a plurality of delay classes for each link, wherein each delay class corresponds to one transmission delay — S110

Determine a total bit quantity according to a preset time interval and a link bandwidth — S120

Determine a bits quota for each delay class according to a preset transmission delay interval between adjacent delay classes and the link bandwidth, wherein a sum of bits quotas for all the delay classes is equal to the total bit quantity — S130

Fig. 2

Delay classN:

Transmission delay: transmission_delay_N;
Bits quota: bits_quota_N;
Used bits quota: used_quota_N;
Unused bits quota: unused_quota_N

⋮

Delay class2:

Transmission delay: transmission_delay_2;
Bits quota: bits_quota_2;
Used bits quota: used_quota_2;
Unused bits quota: unused_quota_2

Delay class1:

Transmission delay: transmission_delay_1;
Bits quota: bits_quota_1;
Used bits quota: used_quota_1;
Unused bits quota: unused_quota_1

Fig. 3

Delay class125:

Transmission delay: 125us;
Bits quota: 100000bits;
Used bits quota: 0;
Unused bits quota: 100000bits

⋮

Delay class2:

Transmission delay: 2us;
Bits quota: 100000bits;
Used bits quota: 0;
Unused bits quota: 100000bits

Delay class1:

Transmission delay: 1us;
Bits quota: 100000bits;
Used bits quota: 0;
Unused bits quota: 100000bits

Fig. 4

Delay class8:

Transmission delay: 125us;
Bits quota: bits_quota_N;
Used bits quota: used_quota_N;
Unused bits quota: unused_quota_N

Delay class7:

Transmission delay: 70us;
Bits quota: 1000000bits;
Used bits quota: 0;
Unused bits quota: 1000000bits

Delay class2:

Transmission delay: 20us;
Bits quota: 1000000bits;
Used bits quota: 0;
Unused bits quota: 1000000bits

Delay class1:

Transmission delay: 10us;
Bits quota: 1000000bits;
Used bits quota: 0;
Unused bits quota: 1000000bits

Fig. 5

Determine a target delay class and a bit quantity reservation requirement of a service flow — S210

Reserve a bit quantity matching the bit quantity reservation requirement for the service flow from an unused bits quota corresponding to the target delay class in the link, wherein the unused bits quota indicates an unoccupied bits quota at the delay class — S220

Fig. 6

Network node A

Virtual network 1

Virtual network 2

Virtual network 3

Virtual network 4

Fig. 7

Determine a target delay class and a bit quantity reservation requirement of a virtual network — S310

Reserve a bit quantity matching the bit quantity reservation requirement for the virtual network from an unused bits quota corresponding to the target delay class in the link, wherein the unused bits quota indicates an unoccupied bits quota at the delay class — S320

Fig. 8

```
 0                   1                   2                   3
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|     Type      |    Length     |       Transmission Delay      |
+-+-+-+-+-+-+-+-+-+-+-+-+-+-+-+-+-+-+-+-+-+-+-+-+-+-+-+-+-+-+-+-+
|                           Bits Quota                          |
+-+-+-+-+-+-+-+-+-+-+-+-+-+-+-+-+-+-+-+-+-+-+-+-+-+-+-+-+-+-+-+-+
|                           Bits Used                           |
+-+-+-+-+-+-+-+-+-+-+-+-+-+-+-+-+-+-+-+-+-+-+-+-+-+-+-+-+-+-+-+-+
```

Fig. 9

Determine a target delay class and a bit quantity reservation requirement of a service flow — S410

Determine at least one candidate path according to a source address, a destination address, and a path computation constraint condition of the service flow — S420

According to the received delay resource advertisement message, acquire unused bits quotas of links of network nodes in the candidate path at the target delay class — S430

Determine a forwarding path of the service flow from the at least one candidate path according to the unused bits quotas of links of the network nodes in the candidate path at the target delay class — S440

Fig. 10

Receive a service flow — S510

Determine a target delay class of the service flow according to a delay requirement attribute carried by the service flow — S520

Transmit the service flow according to a transmission delay corresponding to the target delay class — S530

Fig. 11

```
┌─────────────────────────────────────────────────────┐
│                                                       │
│              Receive a service flow                   │ ⟳ S610
│                                                       │
└─────────────────────────────────────────────────────┘
                         │
                         ▼
┌─────────────────────────────────────────────────────┐
│ According to a packet feature field of the service    │
│ flow, determine a target delay class of the service   │ ⟳ S620
│ flow from a forwarding entry or a policy entry        │
│ matching the packet feature field                     │
└─────────────────────────────────────────────────────┘
                         │
                         ▼
┌─────────────────────────────────────────────────────┐
│                                                       │
│ Transmit the service flow according to a transmission │ ⟳ S630
│ delay corresponding to the target delay class         │
│                                                       │
└─────────────────────────────────────────────────────┘
```

Fig. 12

```
┌─────────────────────────────────────────────────────┐
│  Receive a delay resource advertisement message,      │
│  wherein the delay resource advertisement message     │
│  carries resource attributes of at least one delay    │
│  class of a link, the resource attributes include a   │ ⟳ S710
│  transmission delay and a bits quota which correspond  │
│  to the delay class, and the bits quota is determined  │
│  according to a preset transmission delay interval     │
│  between adjacent delay classes and a link bandwidth   │
└─────────────────────────────────────────────────────┘
```

Fig. 13

```
T0           flow-70   ─────►┌──────────────┐
                              │              │
T0+10us      flow-60   ─────►│              │
                              │              │
T0+20us      flow-50   ─────►│              │
                              │              │
T0+30us      flow-40   ─────►│  Network node │ ───►  Egress port
                              │              │
T0+40us      flow-30   ─────►│              │
                              │              │
T0+50us      flow-20   ─────►│              │
                              │              │
T0+60us      flow-10   ─────►└──────────────┘
            Ingress port
```

Fig. 14

Electronic device 900

Processor 910

Memory 920

Fig. 15

## INTERNATIONAL SEARCH REPORT

| International application No. |
| --- |
| **PCT/CN2023/080822** |

### A. CLASSIFICATION OF SUBJECT MATTER

H04L 47/72(2022.01)i

According to International Patent Classification (IPC) or to both national classification and IPC

### B. FIELDS SEARCHED

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNTXT, ENTXTC, ENTXT, DWPI: 等级, 级别, 优先级, 排序, 顺序, 比特, 迟延, 延迟, 延时, 时延, 带宽, 配额, 分配, 分割, 间隔, 链路, 流量, 确定, 数据量, 需求, 业务, 预留, 转发路径, 资源, class, level, priority, order, bit, delay, latency, bandwidth, quota, allocation, partition, interval, link, traffic, determine, data volume, demand, reservation, forwarding path, resource

### C. DOCUMENTS CONSIDERED TO BE RELEVANT

| Category* | Citation of document, with indication, where appropriate, of the relevant passages | Relevant to claim No. |
| --- | --- | --- |
| Y | CN 113473267 A (HUAWEI TECHNOLOGIES CO., LTD.) 01 October 2021 (2021-10-01) description, paragraphs [0078]-[0177] | 1-15, 23-25 |
| Y | CN 113225196 A (HUAWEI TECHNOLOGIES CO., LTD.) 06 August 2021 (2021-08-06) description, paragraphs [0074]-[0120] | 1-25 |
| Y | CN 108667751 A (ZTE CORP.) 16 October 2018 (2018-10-16) description, paragraphs [0043]-[0084] | 16-25 |
| A | CN 110139319 A (10TH RESEARCH INSTITUTE OF CHINA ELECTRONICS TECHNOLOGY GROUP CORPORATION) 16 August 2019 (2019-08-16) entire document | 1-25 |
| A | CN 106330757 A (TENCENT TECHNOLOGY (SHENZHEN) CO., LTD.) 11 January 2017 (2017-01-11) entire document | 1-25 |
| A | US 2020112362 A1 (HUGHES NETWORK SYSTEMS, LLC) 09 April 2020 (2020-04-09) entire document | 1-25 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **17 May 2023** | **24 May 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

### INTERNATIONAL SEARCH REPORT
**Information on patent family members**

International application No.

**PCT/CN2023/080822**

| Patent document cited in search report | | | Publication date (day/month/year) | Patent family member(s) | | | Publication date (day/month/year) |
|---|---|---|---|---|---|---|---|
| CN | 113473267 | A | 01 October 2021 | None | | | |
| CN | 113225196 | A | 06 August 2021 | WO | 2021147354 | A1 | 29 July 2021 |
| | | | | KR | 20220123090 | A | 05 September 2022 |
| | | | | US | 2022368608 | A1 | 17 November 2022 |
| | | | | EP | 4075732 | A1 | 19 October 2022 |
| CN | 108667751 | A | 16 October 2018 | WO | 2018177256 | A1 | 04 October 2018 |
| CN | 110139319 | A | 16 August 2019 | None | | | |
| CN | 106330757 | A | 11 January 2017 | WO | 2017000728 | A1 | 05 January 2017 |
| | | | | US | 2017331757 | A1 | 16 November 2017 |
| US | 2020112362 | A1 | 09 April 2020 | EP | 3864806 | A1 | 18 August 2021 |
| | | | | WO | 2020076716 | A1 | 16 April 2020 |
| | | | | CA | 3115764 | A1 | 16 April 2020 |

Form PCT/ISA/210 (patent family annex) (July 2022)

REFERENCES CITED IN THE DESCRIPTION

**Patent documents cited in the description**

- CN 202210899147